**Europäisches Patentamt**

**European Patent Office**

**Office européen des brevets**

(11) Veröffentlichungsnummer: **0 030 326**
**B1**

(12) **EUROPÄISCHE PATENTSCHRIFT**

(45) Veröffentlichungstag der Patentschrift:
**21.09.83**

(51) Int. Cl.³: **C 08 J 5/18, C 08 L 81/06**

(21) Anmeldenummer: **80107386.7**

(22) Anmeldetag: **26.11.80**

(54) **Verfahren zur Herstellung von Giessfolien.**

(30) Priorität: **04.12.79 DE 2948673**

(43) Veröffentlichungstag der Anmeldung:
**17.06.81 Patentblatt 81/24**

(45) Bekanntmachung des Hinweises auf die Patenterteilung:
**21.09.83 Patentblatt 83/38**

(84) Benannte Vertragsstaaten:
**BE DE FR GB IT LU NL SE**

(56) Entgegenhaltungen:
**EP-A-732**
**EP-A-733**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Weber, Hans-Leo, Ing. grad., Dahlienweg 7, D-4049 Rommerskirchen (DE)**
Erfinder: **Reese, Eckart, Dr., Aggerstrasse 22, D-4047 Dormagen 1 (DE)**
Erfinder: **Kaloff, Hans, Dr., Lessingstrasse 12, D-4047 Dormagen 5 (DE)**
Erfinder: **Fausten, Hans-Josef, Wilhelm-Busch-Strasse 8, D-4047 Dormagen 5 (DE)**

ACTORUM AG

## Verfahren zur Herstellung von Giessfolien

Gemäss DE-A 2 735 144 bzw. EP-A 0 000 733 (Le A 18 261) sind Gemische aus 90 Gew.-% bis 60 Gew.-% linearem Polyarylsulfon und 10 Gew.-% bis 40 Gew.-% linearem Polycarbonat mit einem $\overline{M}w$ (Gewichtsmittelmolekulargewicht) grösser 60 000 beschrieben.

Vorzugsweise liegt das Mischungsverhältnis zwischen 85 Gew.-% bis 70 Gew.-% an Polyarylsulfon und zwischen 15 Gew.-% und 30 Gew.-% an Polycarbonat.

Daraus hergestellte Giessfolien haben mangelhafte mechanische Eigenschaften und eine starke Neigung zur Spannungsrisskorrosion.

Gegenstand der vorliegenden Erfindung ist ein Verfahren zur Herstellung von Giessfolien aus obengenannten Polyarylsulfon-Polycarbonat-Gemischen, das dadurch gekennzeichnet ist, dass man Lösungen der Polyarylsulfone und der Polycarbonate vor der Herstellung der Giessfolien durch Zugabe von Ethylenglykolmonomethyläther oder Toluol in Mengen von 5 bis 30 Gew.-%, vorzugsweise von 20 Gew.-%, bezogen auf den eingesetzten Feststoff, stabilisiert, und die dann nach üblichen Verfahren hergestellten Giessfolien trocknet und im Reckverhältnis zwischen 1:2 und 1:5 oberhalb der Glasübergangstemperatur der Polyarylsulfon-Polycarbonat-Gemische nach üblichen Verfahren verstreckt.

Lösungen der Polyarylsulfone sind solche in den folgenden Lösungsmitteln wie beispielsweise Methylenchlorid, Ethylenchlorid, Trichlorethan und Chloroform.

Lösungen der Polycarbonate sind solche in den folgenden Lösungsmitteln wie beispielsweise Methylenchlorid, Ethylenchlorid, Trichlorethan, Chloroform, m-Kresol und Pyridin.

Die Lösungen der Polyarylsulfon-Polycarbonat-Gemische zur Herstellung von Giessfolien haben Konzentrationen zwischen 10% und 30%, vorzugsweise zwischen 20% und 25%. Sie lassen sich in bekannter Weise herstellen.

Ethylenglykolmonomethyläther oder Toluol werden als Lösungsvermittler in Mengen von 5 bis 30 Gew.-%, vorzugsweise von 20 Gew.-%, bezogen auf eingesetzten Feststoff, den zu stabilisierenden Polyarylsulfon-Polycarbonat-Giesslösungen zugesetzt, wobei die Zugabe während oder nach der Herstellung der Polyarylsulfon-Polycarbonat-Lösungen erfolgen kann.

Das Vergiessen zu Folien kann in bekannter Weise auf bekannten Trommel- oder Bandgiessmaschinen erfolgen.

Die erhaltenen Giessfolien haben Dicken zwischen 4 μm und 300 μm, vorzugsweise zwischen 6 μm und 180 μm. Die Trocknung der erhaltenen Giessfolien kann bei Temperaturen zwischen 70°C und 140°C in üblicher Weise erfolgen.

Das Verstrecken von Folien ist als Stand der Technik bekannt und wird bei der Herstellung verschiedener Folien, z.B. Polypropylen- und Polyesterfolien angewandt. Durch das Verstrecken wird im Regelfall die Festigkeit des Materials erhöht, bei gleichzeitig abnehmender Reissdehnung.

Nicht vorauszusehen war, dass im vorliegenden Fall die Reissdehnung durch Verstrecken der Folie auf üblichen Apparaturen in Längsrichtung sowohl in Längs- als auch in Querrichtung deutlich verbessert werden kann, und dass die Neigung zur Spannungsrisskorrosion signifikant vermindert wird.

Die Verstreckung kann auf üblichen Apparaturen, wie beispielsweise Rollen- und Kantenreckmaschinen, die eine Verstreckung im Verhältnis von 1:2 bis 1:5 erlauben, durchgeführt werden. Es können Einspalt- und Mehrspaltreckmaschinen verwendet werden.

Die Verstreckung wird bei Temperaturen zwischen 190°C und 220°C, vorzugsweise zwischen 200°C und 215°C durchgeführt, wobei die Glasübergangstemperatur der Komponenten 149°C für das Polycarbonat und 187°C für das Polyarylsulfon beträgt.

Die erfindungsgemäss erhältlichen Giessfolien haben Dicken zwischen 1 μm und 100 μm, vorzugsweise zwischen 2 μm und 60 μm.

Erfindungsgemäss geeignete Polyarylsulfone sind grundsätzlich alle bekannten linearen aromatischen Polysulfone und Polyethersulfone mit $\overline{M}w$ (Gewichtsmittelmolekulargewichte gemessen beispielsweise mittels Lichtstreuung) zwischen etwa 15 000 und etwa 55 000, vorzugsweise zwischen etwa 20 000 und 40 000, wie sie in obiger DE-A 2 735 144 bzw. EP-A 0 000 773 beschrieben sind.

Erfindungsgemäss geeignete Polycarbonate sind aromatische Homopolycarbonate und aromatische Copolycarbonate, denen z.B. ein oder mehrere der folgenden Diphenole zugrunde liegen:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
$\alpha$, $\alpha'$-Bis-(hydroxyphenyl)-diisopropylbenzole

sowie deren kernalkylierte und kernhalogenierte Verbindungen. Diese und weitere geeignete Diphenole sind z.B. in der US-Patentschrift 3 028 365, der deutschen Offenlegungsschrift 2 063 050 und in der Monographie «H. Schnell, Chemistry and Physics of Polycarbonates, Interscience Publishers, New York, 1964» beschrieben.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die Gewichtsmittelmolekulargewichte der erfindungsgemäss geeigneten Polycarbonate sollen über 60 000, vorzugsweise zwischen 65 000 und 120 000 und insbesondere zwischen 75 000 und 110 000 liegen. (Ermittelt aus der Intrinsic-Viskosität, gemessen in $CH_2Cl_2$-Lösung).

Aromatische Polycarbonate im Sinne der Erfindung sind insbesondere Homopolycarbonate aus Bis-2-(4-hydroxyphenyl)-propan (Bisphenol-A) sowie Copolycarbonate aus mindestens 30 Mol-%, vorzugsweise mindestens 60 Mol-% und insbesondere mindestens 80 Mol-% an Bisphenol A und bis zu 70 Mol-%, vorzugsweise bis zu 40 Mol-% und insbesondere bis zu 20 Mol-% aus anderen Diphenolen. (Die Molprozente beziehen sich jeweils auf Gesamtmolmenge an einkondensierten Diphenolen).

Als andere Diphenole sind andere Bis-(hydroxyaryl)-$C_1$-$C_8$-alkane als Bisphenol A sowie Bis-(hydroxyaryl)-$C_5$-$C_6$-cycloalkane geeignet, insbesondere Bis-(4-hydroxyphenyl)-$C_1$-$C_8$-alkane und Bis-(4-hydroxyphenyl)-$C_5$-$C_6$-cycloalkane.

Als andere Diphenole sind beispielsweise Bis-(4-hydroxyphenyl)-methan (Bisphenol F), 2,4-Bis-(4-hydroxyphenyl)-butan, 1,1-Bis-(4-hydroxyphenyl)-cyclohexan, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, 2,4-Bis-(3,5-dimethyl-4-hydroxyphenyl)-2-methylbutan und 1,1-Bis-(3,5-dimethyl-4-hydroxyphenyl)-cyclohexan geeignet.

Erfindungsgemäss bevorzugte Copolycarbonate enthalten Bisphenol A und 1,1-Bis-(4-hydroxyphenyl)-cyclohexan (Bisphenol Z).

Den Lösungen der erfindungsgemässen Polyarylsulfon-Polycarbonat-Gemische können vor dem Vergiessen noch Stabilisatoren gegen Feuchtigkeit, Hitze und UV-Einwirkung zugesetzt werden. Die erfindungsgemäss erhältlichen Giessfolien besitzen hohe Reissfestigkeiten (nach DIN 53 455), gute Reissdehnung (nach DIN 53 455) sowie eine überraschend gute Beständigkeit gegen Spannungsrisskorrosion.

Die erfindungsgemäss erhältlichen Folien können als Dielektrikumsfolien in Kondensatoren sowie als Kern-, Lagen- oder Deckisolation in Transformatoren eingesetzt werden. Durch die monoaxiale Verstreckung stellt sich, wenn die Folien auf Temperaturen oberhalb der Glasübergangstemperatur erhitzt werden, ein Schrumpf ein, der vorteilhaft bei der Herstellung von Kondensatoren und Spulen in Schrumpftechnik benutzt werden kann.

Die erfindungsgemäss erhältlichen Giessfolien haben somit ein Eigenschaftsbild, das den Ansprüchen an Giessfolien im allgemeinen, im besonderen aber im Bereich der Elektroindustrie als Isolierfolie genügt.

### Beispiel 1

70 kg eines linearen Polyarylsulfons hergestellt durch Kondensation von 4,4'-Dichlordiphenylsulfon und Bis-2-(4-hydroxyphenyl)-propan mit einem $\overline{M}w$ von 20 000, und 30 kg eines Polycarbonates auf Basis Bisphenol A mit einem $\overline{M}w$ von 95 000 werden gemeinsam in 325 Liter $CH_2Cl_2$ gelöst. Zur Stabilisierung der Lösung werden 20 kg Ethylenglykolmonomethyläther zugegeben und die Viskosität der Lösung auf 14 Pa.s bei 20°C eingestellt. Die Lösung wird entgast und gefiltert und auf einer Trommelgiessmaschine zu einem 15 µm dicken Film vergossen. Die Folie wird in einem Trockenschrank auf einem Restlösungsmittelgehalt von weniger als 5% getrocknet.

Anschliessend wird die Folie auf einer Rollenreckmaschine bei Temperaturen oberhalb der Glasübergangstemperatur im Verhältnis 1:3 in Längsrichtung verstreckt. Die Eigenschaftswerte zeigt die nachfolgende Tabelle.

### Beispiel 2

Eine gemäss Beispiel 1 hergestellte Lösung wird auf einer Bandgiessmaschine zu einem 120 µm dicken Film vergossen. Die Folie wird gemäss Beispiel 1 im Verhältnis 1:2 zu einem 60 µm dicken Film verstreckt.

### Beispiel 3

Eine gemäss Beispiel 1 hergestellte Lösung wird auf einer Trommelgiessmaschine zu einem 8 µm dicken Film vergossen. Die Folie wird gemäss Beispiel 1 im Verhältnis 1:4 zu einem 2 µm dicken Film verstreckt.

Tabelle

| Folie gemäss Beispiel | | 1 | 2 | 3 | unverstreckt |
|---|---|---|---|---|---|
| Reissfestigkeit/MPa | lgs. | 89 | 88 | 88 | 77 |
| nach DIN 53 455 | qu. | 60 | 60 | 60 | 69 |
| Reissdehnung/% | lgs. | 73 | 60 | 80 | 10 |
| nach DIN 53 455 | qu. | 29 | 23 | 30 | 7 |
| Reissdehnung/% nach 10 Sekunden Lagerung in Toluol/ n-Propanol/1:3 | lgs. | 55 | 55 | 55 | 5 |

## Patentanspruch

Verfahren zur Herstellung von Giessfolien aus Gemischen von 90 Gew.-% bis 60 Gew.-% linearem Polyarylsulfon und 10 Gew.-% bis 40 Gew.-% linearem Polycarbonat mit einem $\overline{M}w$ (Gewichtsmittelmolekulargewicht) grösser 60 000, dadurch gekennzeichnet, dass man Lösungen der Polyarylsulfone und Polycarbonate vor der Herstellung der Giessfolien durch Zugabe von Ethylenglykolmonomethyläther oder Toluol in Mengen von 5 bis 30 Gew.-%, bezogen auf eingesetzten Feststoff, stabilisiert, und die dann nach üblichen Verfahren hergestellten Giessfolien trocknet und im Reckverhältnis zwischen 1:2 und 1:5 oberhalb der Glasübergangstemperatur der Polyarylsulfon-Polycarbonat-Gemische nach üblichen Verfahren verstreckt.

## Claim

Process for the production of cast films from mixtures of 90% by weight to 60% by weight of a linear polyaryl sulphone and 10% by weight to 40% by weight of a linear polycarbonate with a $\overline{M}w$ (weight-average molecular weight) greater than 60,000, characterised in that, before the production of the cast films, solutions of the polyaryl sulphones and of the polycarbonates are stabilised by adding ethylene glycol monomethyl ether or toluene in amounts of 5 to 30% by weight, relative to the solid employed, and the cast films, which are then produced by customary processes, are dried and stretched by customary processes at a stretching ratio of between 1:2 and 1:5 and at a temperature above the glass transition temperature of the polyaryl sulphone/polycarbonate mixtures.

## Revendication

Procédé de préparation de feuilles coulées à partir de mélanges de 90% en poids à 60% en poids de polyarylsulfone linéaire et de 10% en poids à 40% en poids de polycarbonate linéaire présentant une valeur $\overline{M}w$ (poids moléculaire moyen, moyenne en poids) supérieure à 60 000, caractérisé en ce que l'on stabilise les solutions des polyarylsulfones et des polycarbonates avant préparation des feuilles coulées par addition d'éther monométhylique de l'éthylèneglycol ou de toluène en quantités de 5 à 30% en poids, par rapport aux matières solides mises en oeuvre, on sèche les feuilles coulées préparées par des techniques usuelles et on les étire à un rapport d'étirage de 1:2 à 1:5 au-dessus de la température de transition du second ordre des mélanges polyarylsulfone-polycarbonate par des techniques usuelles.